Europäisches Patentamt

European Patent Office

Office européen des brevets

(11) Veröffentlichungsnummer: **0 418 773 A2**

# (12) EUROPÄISCHE PATENTANMELDUNG

(21) Anmeldenummer: 90117828.5

(51) Int. Cl.5: **B32B 3/24**

(22) Anmeldetag: 17.09.90

(30) Priorität: 21.09.89 DE 3931451

(43) Veröffentlichungstag der Anmeldung:
27.03.91 Patentblatt 91/13

(84) Benannte Vertragsstaaten:
AT BE CH DE FR GB IT LI LU NL SE

(71) Anmelder: HOECHST AKTIENGESELLSCHAFT
Postfach 80 03 20
W-6230 Frankfurt am Main 80(DE)

(72) Erfinder: Dinter, Peter, Dipl.-Ing.
Am Wiesenberg 4
W-6227 Hallgarten(DE)
Erfinder: Spross, Bernd
Drosselweg 2a
W-6224 Taunusstein 2(DE)

(54) Dimensionsstabiler Verbundkörper, Verfahren zu seiner Herstellung und seine Verwendung.

(57) Ein dimensionsstabiler Verbundkörper 1 hat die Gestalt einer ebenen oder gekrümmten Platte, die aus einer Anzahl übereinandergeschichteter, miteinander verpreßter, thermoplastischer Kunststoffolien $5'$, $5''$, $5'''$... besteht, die zumindest einseitig mit einer Siegelschicht 10 beschichtet sind. Jede der Kunststoffolien ist mono- und/oder biaxial verstreckt. Einige der den Verbund bildenden Kunststoffolien besitzen Perforationen $7'$, $7''$, $7'''$ .... Die perforierten Kunststoffolien sind derart übereinandergeschichtet, daß die Perforationen sich decken bzw. zueinander versetzt sind.

Zusätzlich zu den perforierten Kunststoffolien können in dem Verbund vollflächige homogene Kunststoffolien ohne Perforationen vorhanden sein. Die perforierten und die vollflächigen Kunststoffolien sind dann so übereinander geschichtet, daß die Perforationen zueinander versetzt sind.

Fig. 2

# DIMENSIONSSTABILER VERBUNDKÖRPER, VERFAHREN ZU SEINER HERSTELLUNG UND SEINE VERWENDUNG

Die Erfindung betrifft einen dimensionsstabilen Verbundkörper in Gestalt einer ebenen oder gekrümmten Platte, aus einer Anzahl übereinander geschichteter, miteinander verpreßter, thermoplastischer Kunststoffolien, die zumindest einseitig mit einer Siegelschicht beschichtet sind, deren Schmelzpunkt niedriger als der Schmelzpunkt jeder der Kunststoffolien ist und die mono- und/oder biaxial verstreckt sind, ein Verfahren zu seiner Herstellung und seine Verwendung.

In den letzten Jahren ist seitens verschiedener Branchen, wie z.B. dem Fahrzeugbau, Flugzeugbau, Apparatebau, ein verstärkter Trend zum Einsatz von Hochleistungsverbundwerkstoffen zu beobachten. Hierunter einzuordnen sind u.a. duroplastische und thermoplastische Polymerwerkstoffe, deren mechanische Eigenschaften durch Einarbeitung von Verstärkungsmaterialien in Form von Textil-, Glas-, Kohlenstoff- oder Aramidfasern um ein Vielfaches gegenüber dem unverstärkten Polymeren verbessert werden.

Alternativ zu dem Einarbeiten von Verstärkungsmaterialien wurden Techniken entwickelt, hochfeste Kunststoffplatten durch Orientierungsprozesse herzustellen. Als eine Technik im Rahmen der Orientierungsprozesse kann das in der EP-A1 - 0 207 047 beschriebene Verfahren gelten, bei dem eine Vielzahl biaxial verstreckter, mit dünnen koextrudierten Siegelschichten ausgerüsteter Folien zu einer dicken, homogenen Platte unter Druck und Temperatur verpreßt werden.

Eine verfahrensspezifische Maßnahme dieser Technik, nämlich die Verwendung einzelner Folienlagen, ermöglicht den gezielten Einbau von Funktionsschichten an beliebiger Stelle des Formkörpers und damit die Maßschneiderei von Eigenschaften des fertigen Formkörpers. So können beispielsweise biaxial verstreckte Folien mit monoaxial oder unverstreckten artgleichen oder artfremden Folien kombiniert werden, um das bruchmechanische Verhalten des Formkörpers in gewünschter Weise zu beeinflussen. Die auf diese Weise erzielten Produkteigenschaften reichen vielfach aber nicht aus, um den extremen mechanischen Anforderungen hochbeanspruchter Materialien in der Praxis gerecht zu werden.

In der AT-PS 383 542 ist ein steifer Formkörper, wie eine Platte oder ein Rohr, aus einer Vielzahl übereinander und/oder nebeneinander geschichteter und miteinander verpreßter, orientierter, d.h. verstreckter, thermoplastischer Kunststoffträger in Folien-, Bändchen-, Monofil- oder Faserform beschrieben. Die verstreckten Kunststoffträger an den beim Über- und/oder Nebeneinanderschichten zur Anlage gelangenden Seiten sind mit thermoplastischem Kunststoff beschichtet, wobei das Beschichtungsmaterial eine niedrigere Kristallitschmelztemperatur aufweist als die Kunststoffträger und die Dicke von je zwei aneinanderliegenden Beschichtungsma terialien geringer ist als die Dicke eines Kunststoffträgers.

Das in der österreichischen Patentschrift AT-PS 383 542 vorgeschlagene Verfahren liefert hochfeste, mechanisch stabile Platten durch Druckanwendung auf verstreckte, koextrudierte dünne Kunststoffolien, unter Einwirkung von Wärme, wobei die an den gegenseitigen Berührungsflächen mit thermoplastischem Kunststoff beschichteten Kunststoffträger bei einer Temperatur oberhalb der Kristallitschmelztemperatur des Beschichtungsmaterials und unterhalb der Kristallitschmelztempera tur des Kunststoffträgers verpreßt werden. Dieses Verfahren bietet von seinem Grundprinzip her gegenüber alternativen Plattenherstelltechnologien, wie z.B. Extrusion, Gießen und Kalandrieren, die Möglichkeit, durch Verpressen bei erhöhter Temperatur einen nennenswerten Abfall der durch das Verstrecken eines einzelnen Kunststoffträgers erzielten günstigen mechanischen und physikalischen Eigenschaften zu verhindern, so daß der Formkörper, trotz seiner größeren, die Abmessungen des einzelnen Kunststoffträgers wesentlich überschreitenden Dimensionen näherungsweise die mechanischen und technologischen Eigenschaften eines einzelnen verstreckten Kunststoffträgers aufweist. Da ein Folienstapel aus einzelnen, gleichartigen oder unterschiedlichen Folien beliebig geschichtet und gepreßt wird, können einerseits über die Art und den Aufbau der verwendeten Folien gezielte Funktionsschichten entweder auf die Oberfläche der Platte aufgebracht oder in Form von Zwischenschichten in die Platte eingefügt werden, und andererseits durch die Auswahl geeigneter Preßmatrizen gleichzeitig entsprechende Oberflächenstrukturierungen geschaffen werden.

Auf vielen Anwendungsgebieten, wo einerseits aus konstruktiven Gründen eine Mindestdicke der Platten unumgänglich ist, bzw. andererseits hohe Trägheitsmomente zur Erzielung biegesteifer Produkte wünschenswert sind, steht vielfach die zwangsläufig damit einhergehende Gewichtszunahme der Produkte einem Einsatz im Wege. Deshalb kämen leichte, gleichzeitig aber auch mechanisch hochfeste, biegesteife Produkte den Interessen vieler Anwender sehr entgegen. Eine praktizierbare Lösung im vorgenannten Sinne stellen z.B. Sandwich-Konstruktionen, u.a. in Form der Wabenstrukturbauweise, dar.

Aufgabe der vorliegenden Erfindung ist es, einen dimensionsstabilen Verbundkörper der eingangs beschriebenen Art zu einem mechanisch hochfesten, biegesteifen, gleichzeitig aber, vom Gewicht her, leichten Verbundkörper weiterzuentwickeln.

Diese Aufgabe wird erfindungsgemäß dadurch gelöst, daß zumindest einige der den Verbund bildenden Kunststofffolien Perforationen aufweisen und daß die perforierten Kunststofffolien derart übereinandergeschichtet sind, daß ihre Perforationen sich decken bzw. zueinander versetzt sind.

In Weiterbildung der Erfindung sind die den Verbund körper bildenden Kunststofffolien einerseits vollflächige, homogene Kunststofffolien ohne Perforationen und andererseits in geometrischer Anordnung perforierte Kunststofffolien, und sind die perforierten und vollflächigen Kunststofffolien alternierend so übereinandergeschichtet, daß die Perforationen zueinander versetzt sind.

In weiterer Ausgestaltung der Erfindung ist der Verbundkörper durch Verpressung perforierter Laminate gebildet, wobei jedes Laminat eine Dicke bis zu 1 mm hat und aus mehreren perforierten Kunststofffolien besteht.

In einer anderen Ausgestaltung der Erfindung ist der Verbundkörper durch Verpressen von, einige Millimeter dicken perforierten Kunststoffplatten gebildet und besteht die einzelne Kunststoffplatte aus mehreren, in perforierter Form verpreßten Laminaten. So ist es möglich, daß der Verbundkörper durch Verpressen von, einige Millimeter dicken perforierten Kunststoffplatten gebildet ist und die einzelne Kunststoffplatte aus Laminaten besteht, die nach dem Laminieren erst perforiert werden. Zweckmäßigerweise besteht der Verbundkörper aus mindestens einer perforierten Kunststoffplatte, die zwischen zwei nicht perforierten Deckplatten eingebettet ist. Ebenso kann der Verbundkörper aus mehreren perforierten Kunststoffplatten bestehen, die zwischen zwei nicht perforierten Deckplatten eingebettet sind, wobei die Perforationen von Kunststoffplatte zu Kunststoffplatte zueinander versetzt sind. Eine weitere Al ternative ergibt sich dadurch, dall der Verbundkörper aus mehreren alternierend geschichteten, perforierten und nicht perforierten Kunststoffplatten besteht, die zwischen zwei nicht perforierten Deckplatten eingebettet sind. Die sonstige Weiterbildung der Erfindung ergibt sich aus den Merkmalen der Patentansprüche 2 bis 5, 7, 13 bis 24.

Zur Herstellung eines Verbundkörpers durch Verpressen übereinandergeschichteter, biaxial und/oder monoaxial verstreckter thermoplastischer, koextrudierter Kunststofffolien werden vor dem Verpressen die Kunststofffolien perforiert, die im Anschluß an das Perforieren zu einem Folienstapel geschichtet werden, wobei die Perforationen aller Kunststofffolien miteinander fluchtend ausgerichtet und/oder alternierend gegeneinander versetzt werden, und wird der Folienstapel zuletzt zu einem untrennbaren Verbundkörper unter Wärmeanwendung verpreßt.

Die weitere Ausgestaltung des Verfahrens zur Herstellung eines Verbundkörpers ergibt sich aus den Merkmalen der Patentansprüche 26 bis 28.

Nach der Erfindung findet der Verbundkörper Verwendung als durchbruch- und durchschußhemmendes Abschirmmaterial im Sicherheitsbereich, als leichtes hochfestes Konstruktionselement im Maschinen- und Apparate-, im Fahrzeug-, Automobil- und Flugzeugbau, als Wand-, Schal-, Stütz- und Drainageelement im Tief-, Tunnel- und Hoch bau und als dekoratives Verkleidungsbauteil im Fassaden-, Messestand- und Innenausbau.

Ein Verbundkörper nach der Erfindung weist praktisch keinerlei Beeinträchtigung seiner Festigkeitseigenschaften auf, besitzt aber ein infolge der Perforationen reduziertes Gewicht. Je nach Auslegung der Perforationsgeometrie, beispielsweise des Stanzlochquerschnittes und der Lochteilung, lassen sich die mechanischen Eigenschaften des fertigen Verbundkörpers gezielt festlegen und gleichzeitig Gewichtsreduzierungen von maximal 50 bis 60 % gegenüber einem Verbundkörper aus Vollmaterial realisieren.

Zur Herstellung des Verbundkörpers werden insbesondere biaxial verstreckte Folien aus Polypropylen und Polyester verwendet. Diese Folien zeichnen sich durch einen günstigen Anschaffungspreis aus und besitzen, als Folge der biaxialen Orientierung, hohe mechanisch Festigkeit. Ein daraus gefertigter Verbundkörper ist ein preiswertes Konstruktionshalbzeug. Die Hervorhebung von Polypropylen- und Polyesterfolien als Basiswerkstoff des Verbundkörpers schließt in keiner weise andere geeignete Polymerwerkstoffe bzw. Polymerkombinationen als Ausgangswerkstoff für den Verbundkörper aus.

Die Erfindung wird im folgenden anhand von Ausführungsbeispielen näher erläutert. Es zeigen:

Fig. 1 in Draufsicht einen Verbundkörper in einer er sten Ausführungsform mit einer geometrischen Anordnung von Perforationen in dem Verbundkörper,

Fig. 2 im Schnitt den plattenförmigen Verbundkörper nach Fig. 1, bestehend aus perforierten Kunststofffolien und vollflächigen Deckfolien,

Fig. 3 im Schnitt eine zweite Ausführungsform eines Verbundkörpers, mit einem Plattenkern aus perforierten Kunststofffolien und vollflächigen Folien,

Fig. 4 in Draufsicht eine dritte Ausführungsform eines ebenen Verbundkörpers, mit rechteckförmigen bzw. quadratischen Perforationen,

Fig. 5 einen Schnitt durch den Verbundkörper nach Fig. 4, als Lochplatte mit durchgehenden Perforationen,

Fig. 6 im Schnitt, mit teilweise vergrößertem Ausschnitt, eine vierte Ausführungsform eines Verbundkörpers mit einer einzelnen perforierten Kernplatte und vollflächigen Deckplatten,

Fig. 7 einen Schnitt, mit teilweise vergrößertem Ausschnitt, durch eine fünfte Ausführungsform des Verbundkörpers, die aus mehreren gekrümmten perforierten Kernplatten und gekrümmten vollflächigen Deckplatten besteht, wobei die geometrische Anordnung der Perforationen von Kernplatte zu Kernplatte variiert,

Fig. 8 im Schnitt, mit vergrößertem Ausschnitt, eine sechste Ausführungsform eines Verbundkörpers aus perforierten und vollflächigen Platten, bei denen die Größe und geometrische Anordnung der Perforationen von Platte zu Platte sich ändert,

Fig. 9 im Schnitt, mit vergrößertem Ausschnitt, eine siebente Ausführungsform eines Verbundkörpers, der aus mehreren, perforierten Kernplatten aufgebaut ist, bei denen die geometrische Anordnung der Perforationen von Kernplatte zu Kernplatte sich ändert, und

Fig. 10 einen Schnitt, mit vergrößertem Ausschnitt, durch eine achte Ausführungsform eines Verbundkörpers, bestehend aus einem aus perforierten Platten zusammengesetzten Kern und vollflächigen Deckplatten, wobei die perforierten Platten unterschiedliche geometrische Anordnung der Perforationen zueinander aufweisen und die Platten mit offenen Perforationen mit solchen abwechseln, deren Perforationen mit Füllmaterialien ausgefüllt sind.

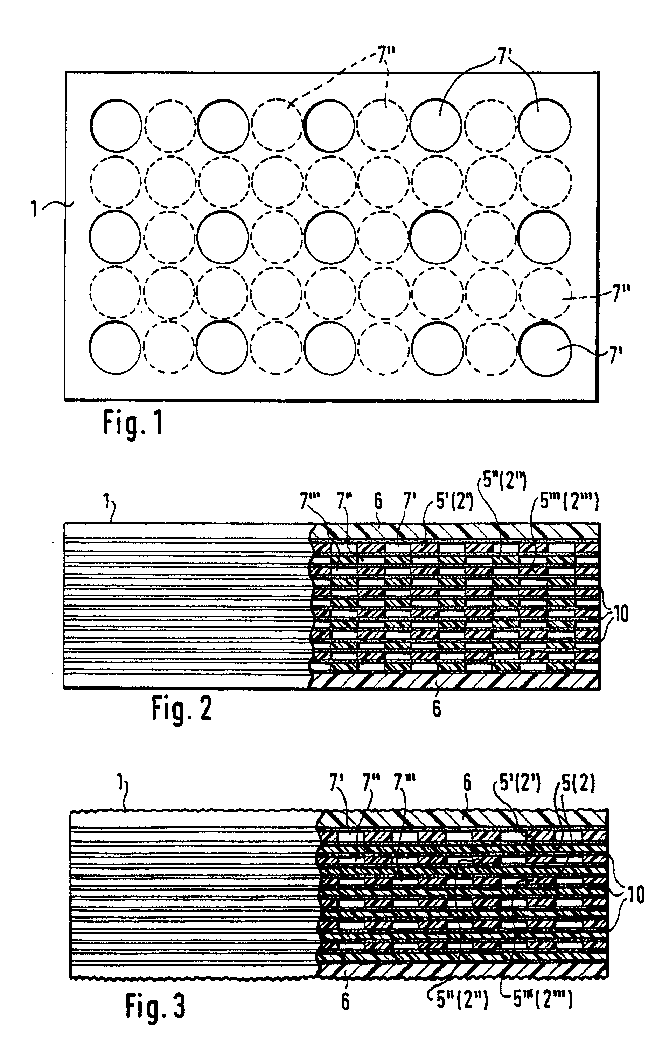

Die erste Ausführungsform nach den Figuren 1 und 2 stellt eine einfache Ausführungsform eines Verbundkörpers 1 in Getalt einer homogenen, ebenen Platte dar, die aus einer Anzahl dünner, mono- und/oder biaxial verstreckter, koextrudierter Kunststoffolien 5', 5'', 5''' mit äußeren Siegelschichten 10 unter Druck und Temperatur zusammengefügt wurde. Die beiden äußeren, vollflächigen Deckfolien 6 schließen die Kunststoffolien 5', 5'', 5''', welche die Gesamtdicke des Verbundkörpers 1 bilden, ein. Die Kunststoffolien 5', 5'', 5''' haben Perforationen 7', 7'', 7''' in Gestalt beliebig geformter Aussparungen. Im Beispiel nach Fig. 1 sind sie als runde Löcher gezeigt. Durch entsprechendes, sich an der Geometrie der Perforationen 7', 7'', 7''' orientierendes Schichten der einzelnen Kunststoffolien 5', 5'', 5'''... werden die Aussparungen gemäß Figur 1 zueinander versetzt, d.h. alternierend gegeneinander auf Lücke angeordnet.

In der Draufsicht nach Fig. 1 zeigen die Perforationen 7' an, die mit vollen Linien gezeichnet sind, daß es sich um Ausnehmungen in der obersten Kunststoffolie 5' handelt. Die Perforationen 7'' in der darunter liegenden Kunststoffolie 5'' sind gestrichelt eingezeichnet, während die Perforationen 7''' in der dritten Kunststoffolie 5''' von oben (s. Fig. 2) mit den Perforationen 7' der obersten Kunststoffolie zur Deckung kommen und daher in der Draufsicht nach Fig. 1 nicht erkennbar sind. Jede der Kunststoffolien 5', 5'', 5'''... trägt zumindest eine Siegelschicht 10, die während des thermischen Verpressens des Verbundkörpers schmilzt, wobei die Schmelze die Perforationen 7', 7'', 7'''... auffüllt und nach dem Abkühlen einen untrennbaren Verbund zwischen den einzelnen Kunststoffolien herstellt.

Eine wechselweise Schichtung von perforierten Kunststoffolien 5', 5'', 5'''... mit vollflächigen Folien 5 weist die in Fig. 3 gezeigte zweite Ausführungsform des Verbundkörpers 1 auf. Der Stapel aus perforierten und vollflächigen Folien 5', 5'' 5''' und 5 wird von Deckfolien 6 umschlossen, die eine größere Dicke als die Folien des Stapels aufweisen. Die Perforationen 7' und 7'' bzw. 7'' und 7''' sind deckungsgleich bzw. zueinander versetzt angeordnet.

Die Deckfolien 6 sind beide reliefartig strukturiert, jedoch liegt es auf der Hand, daß beide auch glatt oder nur die obere oder nur die untere Deckfolie glatt sein können.

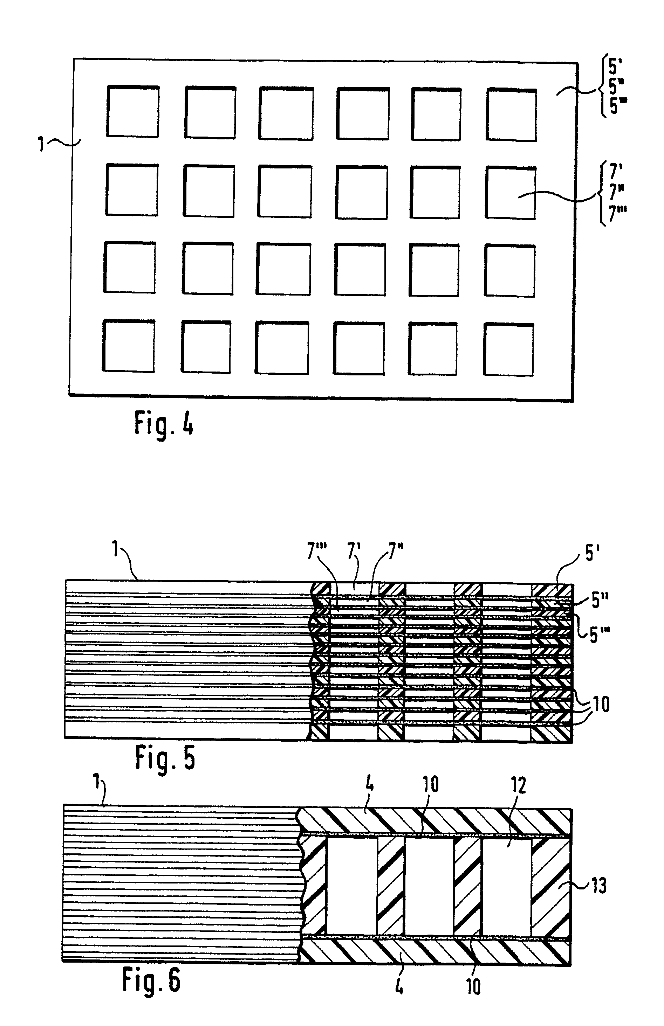

Die dritte Ausführungsform des Verbundkörpers 1 nach den Figuren 4 und 5 unterscheidet sich von den Ausführungsbeispielen nach den Figuren 1 bis 3 dadurch, daß die Schichtung der einzelnen Kunststoffolien 5', 5'', 5''' so erfolgt, daß sich die Perforationen 7', 7'', 7''' decken. Aus dieser geometrischen Anordnung resultiert ein Verbundkörper in Gestalt einer hoch beanspruchbaren Lochplatte mit offenen Querschnitten.

In der Draufsicht von Fig. 4 sind die rechteckförmigen bzw. quadratischen Perforationen 7', 7'', 7'''... der Kunststoffolien 5', 5'', 5'''... erkennbar, die miteinander fluchten und somit offene Querschnitte des Verbundkörpers 1 bilden. Die Schnittdarstellung der Fig. 5 zeigt die einzelnen, übereinandergeschichteten Kunststoffolien 5', 5'', 5'''.... Bei dieser dritten Ausführungsform des Verbundkörpers 1 sind Deckfolien nicht vorhanden. Jede der Kunststoffolien 5', 5'', 5''' ist mit mindestens einer Siegelschicht 10 ausgestattet.

Während die in den Figuren 1 bis 5 gezeigten Ausführungsbeispiele des Verbundkörpers aus dünnen, verstreckten Folien, im Dickenbereich von 10 bis 500 μm, hergestellt werden, ist die Fertigung des Verbundkörpers in derselben Weise selbstverständlich auch aus wesentlich dickeren Laminaten möglich. In diesen Fällen sind die dünnen Kunststoffolien 5', 5'', 5''' bzw. 5 durch im Dickenbereich von mehreren Millimetern liegende Laminate 2', 2'', 2''' bzw. 2 ersetzt, die in einer Vorstufe in identischer Weise wie der Verbundkörper aus den Folieneinzellagen thermisch verprebt werden. Dabei ist es für das Endergebnis unerheblich, ob die Perforationen bereits in die für die Laminatherstellung vorgesehenen Einzelfolien oder erst nachträglich in das fertig verpreßte vollflächige Laminat eingestanzt werden. In den Figuren 2 und 3 werden die Laminate durch in Klammer gesetzte Bezugszahlen 2', 2", 2''' und 2 angedeutet.

Die in Figur 6 gezeigte vierte Ausführungsform der Erfindung besitzt ein erhöhtes axiales Trägheitsmoment des Verbundkörpers 1 gegen Biegebeanspruchung, durch Vergrößerung der Dicke des belastbaren Querschnittes bei gleichzeitiger Minimierung der Gewichtszunahme infolge der vergrößerten Dicke des Verbundkörpers 1. Erreicht wird dies durch Kombination der beiden Deckplatten 4 mit einer hochfesten, Aussparungen 12 aufweisenden und damit im Gewicht deutlich reduzierten Distanzplatte 13, die an der Ober- und Unterseite mit einer Siegelschicht 10 ausgestattet ist. Der Verbundkörper 1 läßt sich in einem Arbeitsgang entweder durch Verpressung entsprechend geschichteter, vollflächiger oder bereits perforierter Folienlagen herstellen, oder durch Kombination der in separaten Einzelschritten aus Einzelfolien gepreßten und perforierten Laminate.

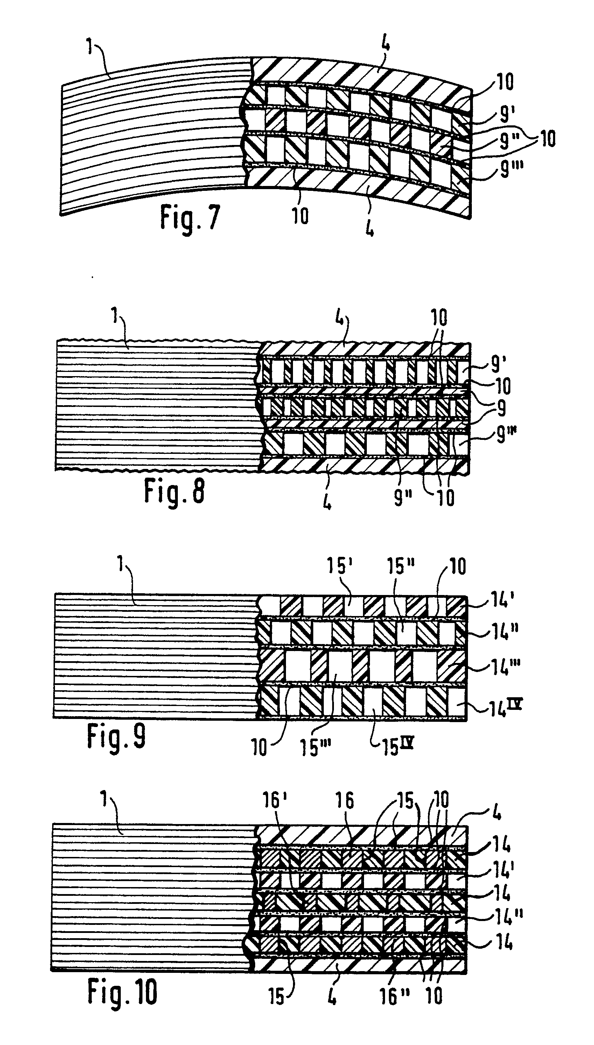

Gegenüber der vierten Ausführungsform der Figur 6 weist die in Figur 7 dargestellte fünfte Ausführungsform des Verbundkörpers 1 mehrere dünne perforierte Kunststoffplatten 9', 9", 9''' zwischen den zwei Deckplatten 4 auf. Dieses Konzept ermöglicht die Maßschneiderei von auf den Belastungsfall bzw. das jeweilige Anwendungsgebiet zugeschnittener Verbundkörper. Im einfachsten Fall lassen sich Dicke und Anzahl der Kunststoffplatten sowie deren Anordnung im Schichtenverbund, beispielsweise das Variieren der Plattendicke von innen nach außen, verändern. Desweiteren kann durch die Wahl der Perforationsgeometrie, d.h. der Querschnittsgröße, Form und Lochteilung jeder einzelnen Platte, sowie der geometrischen Anordnung der Perforationen im Gesamtverbund, Einfluß auf die Eigenschaften des fertigen Verbundkörpers genommen werden.

Eine sechste Ausführungsform des Verbundkörpers 1 gibt Figur 8 wieder. Hierbei sind zwischen perforierten Kunststoffplatten 9', 9" und 9''', 9'''' zusätzliche vollflächige Kunststoffplatten 9 eingebaut. Diese Sandwich-Bauweise bietet sich zur Kombination von Platten aus unterschiedlichen Werkstoffen an, wobei neben polymeren Werkstoffen in nicht verstärkter Form auch durch Materialien, wie Glas-, Textil-, Metall- oder Karbonfasern, ferner durch Metallbleche oder Metallgewebe oder Textilien aus natürlichen oder synthetischen Fasern verstärkte, polymere Werkstoffe in Betracht kommen. Dabei ist es notwendig, für die Verbindung der unterschiedlichsten Werkstoffe gegebenenfalls geeignete Haftvermittler- oder Kleberschichten einzubauen.

Beide Deckplatten 4 sind reliefartig strukturiert, jedoch kann auch nur eine Deckplatte strukturiert sein, während die andere Deckplatte glatt ausgebildet ist.

Während die in den Figuren 6 bis 8 gezeigten Ausführungsformen des Verbundkörpers durch Verwendung von Deckplatten stets eine geschlossene, ebene oder reliefartig strukturierte Oberfläche aufweisen, unterscheidet sich davon die in Figur 9 dargestellte siebente Ausführungsform durch eine perforierte Oberfläche.

Der Verbundkörper 1 ist aus Kunststoffplatten 14', 14", ... 14^iv mit Perforationen 15', 15" ... 15^iv zusammengesetzt, die unterschiedliche Durchmesser bzw. Abmessungen haben und gegeneinander so versetzt sind, daß die Perforationen der übereinandergeschichteten Kunststoffplatten trotz gegenseitiger Versetzung sich teilweise überlappen, und bei Betrachtung in Richtung der Plattendicke miteinander in Verbindung stehen, d.h. offene Querschnitte bilden. Selbstverständlich sind auch Schichtungen der Kunststoffplatten möglich, bei denen die Versetzung der Perforationen zueinander zu geschlossenen Querschnitten führen. In Figur 9 sind auch die Siegelschichten 10 auf den einzelnen Kunststoffplatten eingezeichnet.

Durch geeignete Auswahl und geometrische Anordnung der Perforationen in den den Verbundkörper 1 bildenden Einzelplatten 14', 14", 14''' ... können somit hochfeste, geschlossene sowie durchlässige, freie Querschnitte unterschiedlicher Größen aufweisende Verbundplatten gefertigt werden.

Neben der hervorragenden Biegesteifigkeit der Verbundkörper ergibt deren Sandwich-Bauweise auch erhebliche Verbesserungen des Durchbruchverhaltens bei stoßartiger Belastung, wie sie bei der Anwendung der Verbundkörper als durchbruch- und durchschußhemmende Abschirmmaterialien vor allem verlangt werden. Erfahrungsgemäß weisen homogene Materialien bei Beschädigungen, z.B. in Form von An- oder Einrissen ein meistens unerwünschtes Rißfortpflanzungsverhalten auf, das die Durchbruch- und Durchschußfestigkeit verringert. Eine Maßnahme zur Beeinflussung dieses Phänomens stellt der gezielte Einbau von Störstellen in das Material dar. Beispielsweise kann in einfachster Ausführung der Aufbau des in Figur 7 gezeigten Verbundkörpers für durchschußhemmende Abschirmungen verwendet werden. Bei den durch ihre versetzt ausgerichteten Perforationen als "Labyrinth-Platten" einzustufenden Verbundkörpern wird der Effekt ausgenutzt, daß ein eindringendes Projektil infolge Durchdringens von zonen, wie Hohlraum und Festkörper, mit unterschiedlichen Widerständen gegenüber der Geschoßenergie stets hohe Schädigungsarbeit verrichten muß und somit zwangsläufig schneller in einem solchen Material als in einem homogenen Material abgebremst wird. Die Aufzehrung der Geschoßenergie bewirken die wechselnden Materialzonen in zweifacher Hinsicht, nämlich zum einen dadurch, daß das Projektil zusätzlich aus seiner geradlinigen Bahn abgelenkt wird und zum anderen durch die wechselnden Widerstände der Materialzonen. Die in Figur 10 dargestellten Ausführungsformen des Verbundkörpers 1 bieten durch Kombination homogener, geschlossener Deckplatten 4 mit perforierten, aus unterschiedlichen Polymeren bestehenden Kunststoffplatten 14', 14" mit solchen perforierten Platten 14, deren Perforationen 15 mit unterschiedlichen Materialien 16, 16', 16" ... ausgefüllt sind, umfangreiche Möglichkeiten zur Eigenschaftsmodifikation des Verbundkörpers. Zur Befüllung der Perforationen der Platten 14 können z.B. mit der Perforationsform korrespondierende Stanzlinge aus Polymeren, Metallen, natürlichen oder synthetischen Textilien, Glas, Keramik, Holz, Leder, natürlichen oder synthetischen Kautschuken herangezogen werden. Weiterhin kommen als Füllmaterial Formkörper in Gestalt von Kugeln, wie z.B. aus Metall, oder mineralischen Werkstoffen, wie Glas oder Keramik, Plättchen, wie z.B. aus Glimmer, oder Körnchen, wie z.B. Polymergranulaten, in Betracht. Selbstverständlich lassen sich die Perforationen auch mit Pulvern und Stäuben jeglicher Art befüllen. Sofern auf Flüssigkeiten zurückgegriffen wird, deren Verdampfungstemperatur über der der Preßtemperatur liegt, sind auch diese Materialien einsetzbar. Dasselbe gilt auch für reaktive Medien, wie z.B. schäumbare Produkte, deren Reaktionsmechanismus entweder schon beim Fertigen des Formkörpers oder erst bei einer spezifischen Beanspruchung, z.B. Temperaturbelastung im Brandfall, oder Luftkontakt bei mechanischer Beschädigung, des Verbundkörpers ausgelöst wird. Der Einbau reaktiver Komponenten ergibt Platten mit einem sogenannten "Selbstheilungseffekt", d.h. an Schadstellen des Verbundkörpers bewirken Reaktionen freigesetzter Produkte den Verschluß des lokalen Defektes.

Geeignet zur Herstellung der vielschichtigen Verbundkörper sind thermoplastische Kunststofffolien mit mindestens einer Heißsiegelschicht. Besonders geeignet sind Folien aus thermoplastischen Kunststoffen aus der Gruppe der Polyester und der Polyolefine.

Unter Polyester sind Polyester-Homo- und -Copolymere, Gemische verschiedener Polyester sowie Abmischungen von Polyestern mit anderen Polymeren zu verstehen.

Als Polyester werden insbesondere Propylen-Homopolymere oder -Copolymere eingesetzt, wobei letztere zum überwiegenden Teil aus Propyleneinheiten zusammengesetzt sind.

Als Heißsiegelschichten können die üblicherweise zu diesem Zweck bei der Folienherstellung eingesetzten Beschichtungen verwendet werden. Dies sind bevorzugt statistische Copolymere aus Ethylen-Propylen-Bausteinen sowie Copolyester, enthaltend Ethylenterephthalat- und Isophthalat-Einheiten. Desweiteren kommen als Siegel- oder Haftvermittlerschichten Ethylenvinylacetatcopolymere, Polyurethane, Polyvinylbutyral, Acrylat-Copolymere und Copolyamide in Betracht.

Was die einzelnen Folienlagen des den Verbundkörper bildenden Preßlaminates betrifft, handelt es sich um Folien der vorbeschriebenen Art, die eine Dicke im Bereich von 10 bis 300 μm, insbesondere von 40 bis 200 μm, aufweisen. Die Dicke der Heißsiegelschicht, die ein- oder beidseitig auf der Kunststoffolie bzw. der Kunststoffplatte aufgebracht ist, überschreitet üblicherweise 10 % der Dicke der Trägerfolie nicht und liegt im Bereich von 0,5 bis 5 μm.

Als Ausgangsmaterial zur Fertigung des verbundkörpers sind neben den beschriebenen Laminaten, gepreßt aus einer Anzahl der Kunststoffolien in einem separaten Schritt, auch aus den Laminaten in einem weiteren Schritt bereits gepreßte, mehrere Millimeter dicke, steife Kunststoffplatten geeignet. Die Perforationen können entweder in den Ausgangsfolien eingebracht sein oder im Nachhinein an den Laminaten bzw. Kunststoffplatten durch Stanzen vorgenommen werden.

Hinsichtlich der Ausgestaltung der Perforationen sowie deren geometrischen Anordnung im Verbundkörper ist nach Berücksichtigung der für die Anwendung der Platte wesentlichen Festigkeitskriterien eine Vielzahl von Variationen möglich. Es kann dabei auf eine Vielfalt von funktionellen sowie dekorativen Lochmustern zurückgegriffen werden, wie sie von der einschlägigen Industrie seit langem zur Produktion von Loch- oder Zierblechen eingesetzt werden. Die Kombination von farbigen Platten mit Zierlochungen liefert dekorative Vebundkörper für entsprechende Anwendungen.

Für verschiedene Verbundkörper ergeben sich unterschiedliche Anwendungsmöglichkeiten. Besondere Einsatzmöglichkeiten sind im Fahrzeug- (Auto, Flugzeug, Eisenbahn) und im Apparatebau vorhanden, da auf beiden Gebieten Konstruktionselemente mit hoher mechanischer Festigkeit und möglichst niedrigem Gewicht angestrebt werden.

Der labyrinthartige Aufbau des Verbundkörpers macht ihn für einen Einsatz als durchbruch- und durchschußhemmendes Abschirmmaterial insbesondere geeignet.

Die Ausbildung beliebiger Perforationsgeometrien und deren Anordnung im Verbund sowie die Kombination farblich unterschiedlicher Schichten eröffnen dem Verbundkörper die Anwendung für Dekorationszwecke im Messebau, Bauwesen, Innenausbau, Fassadenbau und sonstiger architektonischer Gestaltung in und an Gebäuden.

Die mit offenen Perforationsquerschnitten ausgerüsteten Verbundkörper sind für Drainagesysteme im Straßen-, Tunnel- und Tiefbau einsetzbar. Die Verwendung als Sicht- und Lärmschutzblende mit reduzierten Windbelastungen ist ferner möglich.

## Ansprüche

1. Dimensionsstabiler Verbundkörper in Gestalt einer ebenen oder gekrümmten Platte, aus einer Anzahl übereinander geschichteter, miteinander verpreßter, thermoplastischer Kunststoffolien, die zumindest einseitig mit einer Siegelschicht beschichtet sind, deren Schmelzpunkt niedriger als der Schmelzpunkt jeder der Kunststoffolien ist und die mono- und/oder biaxial verstreckt sind, dadurch gekennzeichnet, daß zumindest einige der den Verbund bildenden Kunststoffolien (5', 5", 5"'...) Perforationen (7', 7", 7"'...) aufweisen und daß die perforierten Kunststoffolien derart übereinander geschichtet sind, daß ihre Perforationen (7', 7", 7"'...) sich decken bzw. zueinander versetzt sind.

2. Dimensionsstabiler Verbundkörper nach Anspruch 1, dadurch gekennzeichnet, daß die den Verbundkörper (1) bildenden Kunststoffolien einerseits vollflächige homogene Kunststoffolien (5) ohne Perforationen und andererseits in geometrischer Anordnung perforierte Kunststoffolien (5', 5", ...) sind, und daß die perforierten und die vollflächigen Kunststoffolien alternierend so übereinander geschichtet sind, daß die Perforationen zueinander versetzt sind.

3. Dimensionsstabiler Verbundkörper nach den Ansprüchen 1 und 2, dadurch gekennzeichnet, daß die den Verbundkörper (1) bildenden, jeweils die gleiche geometrische Anordnung der Perforationen aufweisenden Kunststoffolien (5', 5", ...) so ausgerichtet sind, daß sich die Perforationen (7', 7", ...) aller perforierten Kunststoffolien decken.

4. Dimensionsstabiler Verbundkörper nach den Ansprüchen 1 bis 3, dadurch gekennzeichnet, daß die perforierten Kunststoffolien alle von Form und Größe her einheitliche Perforationen aufweisen.

5. Dimensionsstabiler Verbundkörper nach den Ansprüchen 1 bis 3, dadurch gekennzeichnet, daß die den Verbundkörper bildenden Kunststoffolien von Form und Größe her unterschiedliche Perforationen aufweisen.

6. Dimensionsstabiler Verbundkörper nach den Ansprüchen 1 bis 5, dadurch gekennzeichnet, daß der Verbundkörper (1) durch Verpressung perforierter Laminate (2', 2", 2"'...) gebildet ist und daß jedes Laminat eine Dicke bis zu 1 mm hat und aus mehreren perforierten Kunststoffolien (7', 7", ...) besteht.

7. Dimensionsstabiler Verbundkörper nach den Ansprüchen 1 bis 5, dadurch gekennzeichnet, daß der Verbundkörper (1) durch Verpressung perforierter Laminate (2', 2", 2"'...) gebildet ist und daß die bis zu 1 mm dicken Laminate aus vollflächigen Kunststoffolien (5) bestehen, die nach der Lamination perforiert werden.

8. Dimensionsstabiler Verbundkörper nach den Ansprüchen 1 bis 5, dadurch gekennzeichnet, daß der Verbundkörper (1) durch Verpressen von, einige Millimeter dicken perforierten Kunststoffplatten (3', 3"...) gebildet ist und daß die einzelne Kunststoffplatte aus mehreren, in perforierter Form verpreßten Laminaten besteht.

9. Dimensionsstabiler Verbundkörper nach den Ansprüchen 1 bis 5, dadurch gekennzeichnet, daß der Verbundkörper (1) durch Verpressen von, einige Millimeter dikken, perforierten Kunststoffplatten (3', 3" ...) gebildet ist und daß die einzelne Kunststoffplatte aus Laminaten besteht, die nach dem Laminieren perforiert werden.

10. Dimensionsstabiler Verbundkörper nach Anspruch 8 oder 9, dadurch gekennzeichnet, daß der Verbundkörper (1) aus mindestens einer perforierten Distanzplatte (13) besteht, die zwischen zwei nicht perforierten Deckplatten (4) eingebettet ist.

11. Dimensionsstabiler Verbundkörper nach Anspruch 8 oder 9, dadurch gekennzeichnet, daß der Verbundkörper (1) aus mehreren perforierten Kunststoffplatten (3', 3"...) besteht, die zwischen zwei nicht perforierten Deckplatten (4) eingebettet sind, wobei die Perforationen (8', 8", 8"' ...) von Kunststoffplatte zu Kunststoff-platte zueinander versetzt sind.

12. Dimensionsstabiler Verbundkörper nach Anspruch 10 oder 11, dadurch gekennzeichnet, daß der Verbundkörper (1) aus mehreren alternierend geschichteten, perforierten und nicht perforierten Kunststoffplatten (3', 3"... bzw. 9) besteht, die zwischen zwei nicht perforierten Deckplatten (4) eingebettet sind.

13. Dimensionsstabiler Verbundkörper nach Anspruch 8 oder 9, dadurch gekennzeichnet, daß der Verbundkörper (1) aus mehreren perforierten Kunststoffplatten (3', 3"...) besteht, und daß die Perforationen (8', 8"...) von Kunststoffplatte zu Kunststoffplatte zueinander versetzt sind und/oder miteinander fluchten.

14. Dimensionsstabiler Verbundkörper nach den Ansprüchen 8 bis 13, dadurch gekennzeichnet, daß die zum Verbundkörper verpreßten Kunststoffplatten (3, 3'... bzw. 9, 9'...) gleiche oder unterschiedliche Dicken aufweisen.

15. Dimensionsstabiler Verbundkörper nach den Ansprüchen 8 bis 14, dadurch gekennzeichnet, daß die zum Verbundkörper (1) verpreßten, perforierten Kunststoffplatten (3', 3"...) hinsichtlich Form, Größe und geometrischer Anordnung der Perforationen gleiche oder unterschiedliche Ausgestaltung aufweisen.

16. Dimensionsstabiler Verbundkörper nach den Ansprüchen 8 bis 15, dadurch gekennzeichnet, daß die zum Verbundkörper verpreßten, perforierten und/oder nicht perforierten Kunststoffplatten aus gleichen oder unterschiedlichen Polymerfolien bestehen.

17. Dimensionsstabiler Verbundkörper nach den Ansprüchen 8 bis 16, dadurch gekennzeichnet, daß die zum Verbundkörper (1) verpreßten, perforierten und/oder nicht perforierten Kunststoffplatten Verstärkungsmaterialien Sin Form von Glas-, Textil-, Metall-, Aramid- und/oder Karbonfasern enthalten.

18. Verbundkörper nach den Ansprüchen 1 bis 17, dadurch gekennzeichnet, daß die Perforationen der zum Verbundkörper verpreßten, perforierten Kunststoffolien und -platten mit flüssigen, pulverförmigen oder festen Materialien ausgefüllt sind.

19. Dimensionsstabiler Verbundkörper nach den Ansprüchen 1 bis 18, dadurch gekennzeichnet, daß zum Verbinden der unterschiedlichen Kunststoffolien bzw. -platten diese mit Haftvermittler- bzw. Kleberschichten (10) ausgerüstet sind.

20. Dimensionsstabiler Verbundkörper nach den Ansprüchen 1 bis 19, dadurch gekennzeichnet, daß die äußeren Oberflächen des Verbundkörpers glatt und/oder reliefartig strukturiert sind.

21. Dimensionsstabiler Verbundkörper nach den Ansprüchen 1 bis 20, dadurch gekennzeichnet, daß die Kunststoffolien des Verbundkörpers aus thermoplastischen Kunststoffen aus der Gruppe Polyester, wie Polyethylenterephthalat, Polyolefin, wie Polypropylen, Polyethylen, Polystyrol, Polycarbonat, Polyamid, Polyvinylacetat oder Copolymeren oder Terpolymeren oder Mischungen aus diesen bestehen.

22. Dimensionsstabiler Verbundkörper nach den Ansprüchen 1 bis 7, dadurch gekennzeichnet, daß die einzelnen Lagen der Kunststoffolien des Verbundkörpers im Dickenbereich von 10 bis 300 $\mu$m, insbesondere von 40 bis 200 $\mu$m liegen.

23. Dimensionsstabiler Verbundkörper nach Anspruch 19, dadurch gekennzeichnet, dall die Haftvermittler-bzw. Siegelschichten aus statistischen Co- oder Terpolymeren von $\alpha$-Olefinen mit 2, 3 und/oder 4 C-Atomen, Copolyestern mit Ethylenterephthalat- und Isophthalateinheiten, Ethylenvinylacetat-Copolymeren, Acrylat-Copolymeren, Copolyamiden, Polyurethanen, Polyvinylbutyral bestehen.

24. Dimensionsstabiler Verbundkörper nach den Ansprüchen 1 bis 7, dadurch gekennzeichnet, daß der Verbundkörper aus transparenten und/oder opaken und/oder eingefärbten Kunststoffolien besteht.

25. Verfahren zur Herstellung eines Verbundkörpers nach einem oder mehreren der Ansprüche 1 bis 24 durch Verpressen übereinander geschichteter, biaxial und/oder monoaxial verstreckter, thermoplastischer, koextrudierter Kunststoffolien, dadurch gekennzeichnet, daß vor dem Verpressen die Kunststoffolien perforiert werden, daß sie im Anschluß an das Perforieren zu einem Folien stapel geschichtet werden, daß die Perforationen aller Kunststoffolien miteinander fluchtend ausgerichtet und/oder alternierend gegeneinander versetzt werden, und daß der Folienstapel zuletzt zu einem untrennbaren Verbundkörper unter Wärmeanwendung verpreßt wird.

26. Verfahren zur Herstellung eines Verbundkörpers nach einem oder mehreren der Ansprüche 1 bis 24, durch Verpressen übereinander geschichteter Laminate aus biaxial und/oder monoaxial verstreckten, thermoplastischen, koextrudierten Kunststoffolien, dadurch gekennzeichnet, daß vor dem Verpressen die Laminate perforiert werden, daß sie anschließend zu einem Laminatstapel geschichtet werden, daß die Perforationen aller Laminate miteinander zur Deckung gebracht und/oder alternierend von Laminat zu Laminat gegeneinander versetzt werden und daß der Laminatstapel zuletzt zu einem untrennbaren Verbundkörper unter Wärmeanwendung verpreßt wird.

27. Verfahren nach Anspruch 26, dadurch gekennzeichnet, daß vor dem Verpressen Laminate, die aus perforierten Kunststoffolien bestehen, zu einem Laminatstapel in einer Weise übereinandergeschichtet werden, daß die Perforationen der Laminate miteinander fluchten und/oder zueinander versetzt werden und daß anschließend der Laminatstapel unter Wärmeanwendung zu einem untrennbaren Verbundkörper verpreßt wird.

28. Verfahren zur Herstellung eines Verbundkörpers nach einem oder mehreren der Ansprüche 1 bis 24, dadurch gekennzeichnet, dau vor dem Verpressen mehrere Kunststoffplatten, die mehrere Millimeter dick sind und von denen jede aus perforierten Laminaten bzw. aus nach dem Laminieren nachträglich perforierten Laminaten besteht, so zu einem Stapel geschichtet werden, daß die Perforationen aller Kunststoffplatten zur Deckung gebracht werden bzw. alternierend von Platte zu Platte zueinander versetzt werden, und daß anschließend der Plattenstapel zu einem untrennbaren Verbundkörper thermisch verpreßt wird.

29. Verwendung des Verbundkörpers nach den Ansprüchen 1 bis 24, als durchbruch- und durchschußhemmendes Abschirmmaterial im Sicherheitsbereich, als leichtes, hochfestes Konstruktionselement im Maschinen- und Apparate-, im Fahrzeug-, Automobil- und Flugzeugbau, als Wand-, Schal-, Stütz- und Drainageelement im Tief-, Tunnel- und Hochbau, und als dekoratives Verkleidungsbauteil im Fassaden-, Messestand- und Innenausbau.

7"

7'

1

7"

7'

## Fig. 1

1

7'''' 7" 6 7' 5'(2') 5"(2") 5'''(2''')

10

## Fig. 2

6

1

7' 7'' 7''' 6 5'(2') 5(2)

10

## Fig. 3

6    5"(2")   5'''(2''')

EP 0 418 773 A2

Fig. 4

Fig. 5

Fig. 6

Fig. 7

Fig. 8

Fig. 9

Fig. 10